# EUROPEAN PATENT SPECIFICATION

(11) **EP 0 618 000 B1**
(45) Date of publication and mention of the grant of the patent: **20.03.1996**
(21) Application number: 93112163.6
(22) Date of filing: 29.07.1993
(51) Int. Cl.: B01F 17/00, C11D 1/83, B01F 17/10, B01F 17/42, B01F 17/38, C11D 1/12, C11D 3/075, C09D 7/06, C09J 4/00, C09J 133/06, C09J 133/08, D06M 13/175, D06M 13/256

(54) **Water soluble surfactant compositions**
Wasserlösliche Netzmittelgemische
Compositions tensioactives hydrosolubles

(30) Priority: 06.08.1992 US 927031
(43) Date of publication of application: 05.10.1994
(73) Proprietor: AIR PRODUCTS AND CHEMICALS, INC., Allentown, PA 18195-1501 (US)
(72) Inventor: Shah, Virendra Varjivan, Macungie, PA 18062 (US); Dickenson, John Bartram, North Wales, PA 19454 (US)
(74) Representative: Kador & Partner

(56) References cited:
- EP-A- 0 024 711
- EP-A- 0 103 696
- EP-A- 0 209 719
- EP-A- 0 255 930
- EP-A- 0 320 223
- DE-A- 3 831 574
- FR-A- 947 150
- FR-A- 2 411 232
- FR-A- 2 411 233
- FR-A- 2 515 062
- GB-A- 2 173 508
- US-A- 2 342 150
- US-A- 2 562 155
- US-A- 2 562 156
- US-A- 2 969 332
- US-A- 4 438 026

## Description

### FIELD OF THE INVENTION

This invention pertains to water soluble, sulfur containing surfactant compositions of the sulfosuccinate type.

### BACKGROUND OF THE INVENTION

Wetting agents based upon sulfur containing surfactants and particularly those sulfur containing surfactants known as sulfosuccinates are widely known and described in the literature. These wetting agents are used in high speed textile process operations, pressure sensitive adhesives, dye systems and other applications requiring surface active or emulsifying agents.

One of the difficulties associated with sulfosuccinate wetting agents is that in concentrated form they are solid and paste-like. These pastes are difficult to dissolve in cold water. Concentrated aqueous sulfosuccinates may be rendered fluid by incorporating solubilizing additives such as water miscible alcohols. However, when solutions of these surfactants are dispersed in water in low concentration, the solubilizing agents tend to be extracted and surfactant gels form which then take time to dissolve. In addition many of these solubilizing agents tend to contribute to volatile organic component levels in the final product. Representative literature disclosing sulfosuccinates including their conversion to water soluble formulations are as follows:

U.S. 2,342,150 discloses esters of sulfodicarboxylic acids, e.g., sodium dioctyl sulfosuccinate and their application in the wetting of coal, coke, iron, and other industrial and mining operations. To enhance the water solubility of the sulfodicarboxylic acids in cold water, the esters of sulfodicarboxylic acids are mixed with urea with the ester to urea ratio being from 0.85 lb ester to 1.5-3 lb of urea. Optionally, ethylene glycol can be added to the mixture to lower the freezing temperature of the aqueous system.

U.S. 2,441,341 discloses surface-active dialkyl sulfosuccinates with the alkyl groups having from 5 to 10 carbon atoms and their use as wetting agents. The patentees point out that these systems have been sold commercially as solutions in water or aqueous organic solvents or in admixture with inert organic or inorganic diluents. In the pure 100% form, the dialkyl sulfosuccinates are solid waxes and dissolve very slowly in water. To enhance processing of the sulfosuccinates into powders, the patentees report the addition of alkali metal salts of benzoic acid therein.

U.S. 2,562,155 and 2,562,156 disclose various wetting and detergent compositions containing monoalkyl sulfosuccinates and solubilizing agents therefor. To enhance the solubility of the monoalkyl sulfosuccinates in water, the patentees report that water soluble alcohols and ethers of ethylene glycol and other agents can be utilized to solubilize the higher dialkyl sulfosuccinates. However, these agents are not suited for the solubilization of alkali metal and ammonium salts of higher monoalkyl sulfosuccinates. To enhance solubility of the higher monoalkyl sulfosuccinates, the patentees incorporate magnesium and beryllium salts into the mixture, the salts being present in an amount from 0.25 to 1.5 moles per mole of monoalkyl sulfosuccinate salt.

U.S. 2,969,332 discloses various wetting and detergent compositions containing dioctyl sulfosuccinate in combination with a higher fatty acid, and a solubilizing or dispersing agent. Saturated and unsaturated aliphatic fatty, monocarboxylic acids having sixteen or more carbon atoms are effective antifoaming agents and diethylene glycol esters are effective solubilizing agents for the mixture of dioctyl sulfosuccinate and higher fatty acids.

U.S. 4,692,271 discloses a preparation of surfactant mixtures in a fluid "G" phase of 50% concentration and higher by mixing surfactant products from at least two classes of surfactants which include alkyl sulfates and alkyl sulfosuccinates. Others include fatty ester sulfonates and alkylphenol sulfonates.

U.S. 4,473,489 discloses improving the flow behavior of water soluble salts of alkyl polyglycol ether sulfosuccinates and alkylarylpolyglycol ether sulfosuccinates by adding a viscosity regulator such as a lower polyalkylene ether glycol, a water soluble salt of a monosulfosuccinate of a lower polyalkyleneglycol, or a water soluble salt of a disulfosuccinate of a polyalkylene ether glycol.

U.S. 4,476,037 discloses aqueous concentrates of a tenside of the sulfate and sulfonate type, e.g., polyalkylene ether glycol sulfosuccinates and alkyl sulfosuccinates, etc. incorporating a viscosity reducing amount of a polyglycol ether sulfate. The patentees report in the past that it had been common to add lower alkanols in amount to about 20% to enhance the solubility of the wetting agent. The presence of the alcohols was not desirable in many polymer dispersions, whereas the addition of water soluble salts of mono and/or disulfates of poly-lower alkyl ether glycols were effective as viscosity regulators for these classes of wetting agents.

U.S. 5,039,451 discloses a preparation of surfactants capable of performing "G" phase system by preparing mixtures of anionic surfactants with other non-homologous anionic surfactants or nonionic and/or amphoteric surfactants with other non-homologous cationic surfactants and/or nonionic and amphoteric surfactants.

### SUMMARY OF THE INVENTION

This invention relates to water soluble surfactant compositions having a high concentration of surface active ingredient and comprises a mixture of:
A. a sulfur containing wetting agent represented by the formulas: 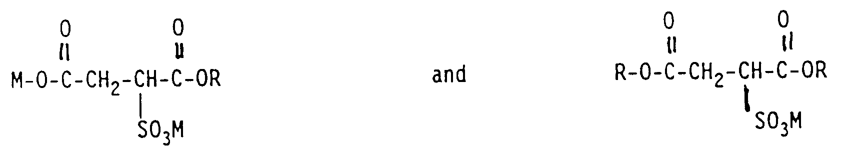 wherein: M represents an alkali metal, an alkaline earth or an ammonium group, and R is alkyl having from 1-20 carbon atoms; and,
B. an alkoxylated acetylenic alcohol represented by the formulas: 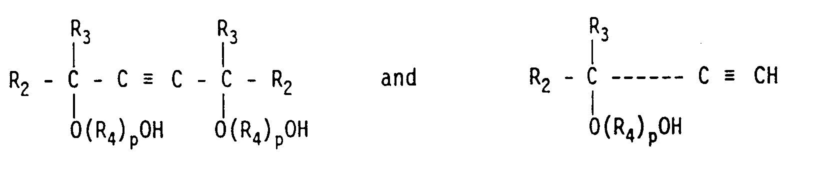 wherein: R₂ and R₃ are lower alkyl having from 1-4 carbon atoms, R₄ is C₂₋₄ alkylene oxide and p is from 0.25 to 15.

The mixture of sulfur containing wetting agent of the sulfosuccinate type provides many advantages, and these include:
an ability to formulate highly active water soluble wetting systems which are essentially free of volatile organic components (VOC);
an ability to formulate wetting agent systems having improved viscosity characteristics;
an ability to enhance the wettability of aqueous systems at relatively low levels of surface active agent;
an ability to formulate wetting agents at high concentration; an ability to formulate storage stable clear wetting agent systems;
an ability to formulate wetting agent systems having low surface tension and low foaming; and,
an ability to form wetting agent systems which are readily dispersible in water.

### DETAILED DESCRIPTION OF THE INVENTION

The rendering of sulfur containing wetting agents water soluble for forming a wetting agent system having a high concentration of active wetting agent is based upon the finding that a nonionic surfactant of low hydrophile-lipophile balance (HLB) of the alkoxylated acetylenic alcohol type can be utilized to enhance the water dispersibility and other properties of the sulfur containing wetting agent. The sulfur containing wetting agents are represented by the formulas: 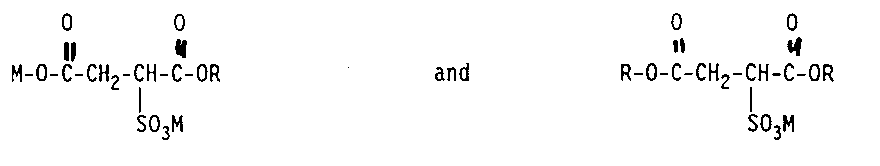
wherein: M represents an alkali metal, an alkaline earth or an ammonium group, and R is alkyl having from 1-20 carbon atoms. Preferably, M is sodium. The R group can be butyl, amyl, hexyl, octyl, nonyl, dodecyl, and the like. Generally, the R group is a higher molecular weight alkyl group and has from 8 to 12 carbon atoms.

The sulfur containing wetting agents suited for practicing this invention include sodium dihexylsulfosuccinate; sodium dioctylsulfosuccinate; sodium di(2-ethylhexyl) sulfosuccinate; sodium diamyl sulfosuccinate, and the like.

The alkoxylated acetylenic alcohols suited for effecting the water solubilization of the sulfur containing wetting agents are represented by the formulas: 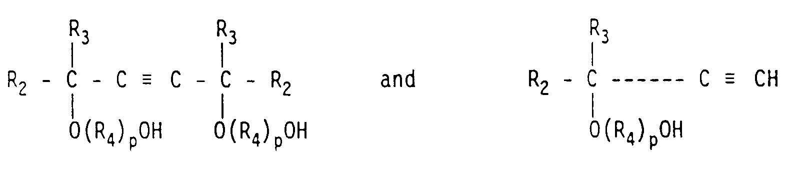
wherein: R₂ and R₃ are lower alkyl having from 1-4 carbon atoms, R₄ is C₂₋₄ alkylene oxide and p is from 0.25 to 15.

Examples of alkoxylated acetylenic alcohols, include the ethylene oxide and propylene oxide derivatives of acetylenic glycols wherein the total number of ethylene oxide units in the acetylenic glycol range from 0.5 to 30, and preferably 1 to 15. In that case each p group may range from 0.5 to 5. Generally, the alkylene oxide is ethylene oxide. Specific examples of acetylenic alcohols the subject of alkoxylation are:
2,4,7,9-tetramethyl-5-decyne-4,7-diol
4,7-dimethyl-5-decyne-4,7-diol
2,3,6,7-tetramethyl-4-octyne-3,6-diol
3,6-diethyl-4-octyne-3,6-diol
2,5-dicyclopropyl-3-hexyne-2,5-diol
3,6-dimethyl-4-octyne-3,6-diol
2,5-diphenyl-3-hexyne-2,5-diol
2,5-dimethyl-3-hexyne-2,5-diol
5,8-dimethyl-6-dodecyne-5,8-diol
2,5,8,11-tetramethyl-6-dodecyne-5,8-diol
3,5-dimethyl-1-hexyn-3-ol
7,4,7,9-tetramethyl-5-decyne-4,7-diol
3,6-dimethyl-1-heptyn-3-ol
7-tetradecyne-6,9-diol
8-hexadecyne-7,10-diol
1-octyn-3-ol
1-nonyn-3-ol
Generally, the level of alkoyxlated acetylenic alcohol utilized in preparing the wetting agent systems of this invention range from 20% to 85% by weight while the percent of sulfur containing wetting agent ranges from 15% to 80 %. Typically, the ratio is from 30% to 75% alkylene oxide adduct of acetylenic alcohol and 35% to 65% of the sulfur containing wetting agent system. Preferably sodium dioctyl sulfosuccinate is the sulfur containing wetting agent and the alkoxylated acetylenic alcohol is the ethoxylated adduct of 2,4,7,9-tetramethyl-5-decyne-4,7-diol with the percentage of sodium dioctyl sulfosuccinate being from 50 to 70% by weight and the ethoxylated tetramethyldecynediol is from 30 to 50%.

The addition of the alkoxylated acetylenic alcohols can be accomplished by simple mixing with the result that stable wetting agent formulations can be prepared. Although the mixture of sulfosuccinate to alkoxylated acetylenic alcohol can vary over a wide range, the preferred levels provide clearer formulations and lower viscosity systems. At high sulfosuccinate levels the viscosity of the system may become quite high.

The following examples are provided to illustrate preferred embodiments of the invention and are not intended to restrict the scope thereof.

### Example 1

### Water Dispersible Dioctyl Sulfosuccinate Systems

A series of wetting agent formulations was prepared in conventional manner incorporating ethylene oxide adducts of acetylenic alcohols to provide a basis for comparison of solubility and physical properties of the wetting agent system against conventional dioctyl sulfosuccinate systems. Table 1 below sets forth the formulation and physical properties.

**TABLE 1**

| Ingredients | Formulation | | | | | |
|---|---|---|---|---|---|---|
| | I | II* | III | IV | V | VI |
| Dioctyl sulfosuccinate | 85 | 75 | 80 | 49.34 | 49.34 | 32.25 |
| Water | 15 | 15 | 5.9 | 19.41 | 19.41 | 8.75 |
| Isopropyl alcohol | -- | 10 | -- | -- | -- | 16.25 |
| Propylene glycol | -- | -- | 14.1 | -- | -- | -- |
| Surfynol 440** | -- | -- | -- | 31.25 | -- | -- |
| Surfynol 465*** | -- | -- | -- | -- | 31.25 | -- |
| Surfynol 104**** | -- | -- | -- | -- | -- | 42.75 |
| % Solid | 85 | 75 | 80 | 80.5 | 80.5 | 75 |
| Viscosity, 30 RPM-cps | Paste | 300 | 2050 | 250 | 220 | 200 |
| % Volatile Org. Compd. (VOC) | 1.0 | 11.8 | 14.8 | 3.9 | 0.52 | 51.7 |

| | | | | | | |
|---|---|---|---|---|---|---|
| * This product is sold under the trademark Aerosol OT-75 | | | | | | |
| ** Surfynol 440 is a trademark identifying the ethoxylated derivative of 2,4,7,9-tetramethyl-5-decyne-4,7-diol (TMDD) having about 3 moles ethylene oxide units per mole. | | | | | | |
| *** Surfynol 465 is a trademark identifying the ethoxylated derivative of 2,4,7,9-tetramethyl-5-decyne-4,7-diol (TMDD) having about 10 moles ethylene oxide units per mole. | | | | | | |
| **** Surfynol 104 is a trademark identifying TMDD. | | | | | | |

As can be seen from Table 1, sodium dioctyl sulfosuccinate wetting agent by itself, which is in paste form, (Run 1) is not readily water dispersible and has a gel or paste-like viscosity. The addition of isopropyl alcohol and/or propylene glycol, as is used in Aerosol OT renders the sodium dioctyl sulfosuccinate water dispersible (Runs II and III), but in doing so raises the level of volatile organic compound (VOC) in excess of 10% VOC. On the other hand, Runs IV and V show that the ethylene oxide adducts of TMDD provide high solids, e.g., 80 % and viscosities which are lower than the commercial systems which were exemplified in Runs II and III. Yet they were extremely low in VOC. TMDD when used alone (Run VI) resulted in high VOC and the system had a tendency to crystallize.

### Example 2

### Water Dispersible Sodium Dioctyl Sulfosuccinate Systems

The procedure of Example 1 in formulating wetting agents systems was repeated, except the range of wetting agent, vis-a-vis ethylene oxide adduct of TMDD was varied over wide range. The results are provided in Tables 2 and 3.

**TABLE 2**

| Range 25 to 50 parts Sulfosuccinate Paste | | | | | | | |
|---|---|---|---|---|---|---|---|
| Ingredients | I | II | III | IV | V | VI | VII |
| DOSS* | 25 | 50 | 25 | 50 | 50 | -- | -- |
| Surfynol 420*** | 75 | 50 | -- | -- | -- | -- | -- |
| Surfynol 440 | -- | -- | 75 | 50 | -- | -- | -- |
| Surfynol 465 | -- | -- | -- | -- | 50 | -- | -- |
| Commercial DOSS in PG** | -- | -- | -- | -- | -- | 100 | 94 |
| Water | -- | -- | -- | -- | -- | -- | 6 |
| % Solid | 96 | 92 | 96 | 92 | 92 | 85 | 80 |
| Appearance (Clear=C, Hazy=H) | C | C | H | C | H | C | C |
| Viscosity, cps, 30 RPM | <500 | <700 | <500 | <700 | <700 | >3000 | 2000 |

| | | | | | | | |
|---|---|---|---|---|---|---|---|
| * 85% aqueous paste of sodium dioctyl sulfosuccinate. | | | | | | | |
| ** 85% in propylene glycol | | | | | | | |
| *** Surfynol 420 is the trademark identifying the ethoxylated derivative of 2,4,7,9-tetramethyl-5-decyne-4,7-diol (TMDD) having about 1.3 moles ethylene oxide units per mole. | | | | | | | |

**TABLE 3**

| Range 65 to 85 parts Sulfosuccinate Paste | | | | | | | |
|---|---|---|---|---|---|---|---|
| Ingredients | I | II | III | IV | V | VI | VII |
| DOSS* | 65 | 80 | 65 | 80 | 65 | 80 | 85 |
| Surfynol 420*** | 35 | 20 | -- | -- | -- | -- | -- |
| Surfynol 440 | -- | -- | 35 | 20 | -- | -- | -- |
| Surfynol 465 | -- | -- | -- | -- | 35 | 20 | 15 |
| Water | -- | -- | -- | -- | -- | -- | 6 |
| % Solid | 89 | 87 | 89 | 87 | 89 | 87 | -- |
| Appearance (Clear=C, Hazy=H) | C | C | C | C | C | C | C |
| Viscosity, cps, 30 RPM | <500 | <700 | <500 | <700 | <700 | >3000 | 2000 |

| | | | | | | | |
|---|---|---|---|---|---|---|---|
| * 85% aqueous paste of sodium dioctyl sulfosuccinate. | | | | | | | |
| ** 85% in propylene glycol | | | | | | | |
| *** Surfynol 420 is the trademark identifying the ethoxylated derivative of 2,4,7,9-tetramethyl-5-decyne-4,7-diol (TMDD) having about 1.3 moles ethylene oxide units per mole. | | | | | | | |

Tables 2 and 3 show that ethoxylated TMDD, which is a liquid, is a very effective solvent for DOSS since the blends have low viscosity at high solids in comparison to the conventional solvents such as ethylene glycol and propylene glycol. The results show that commercial ethoxylated acetylenic glycols having from 1.3, preferably 3 to 10 ethylene oxide groups provide excellent properties.

### Example 3

### Surface Tension Evaluation of Wetting Agents

The surface tension of several wetting agent formulations, including sodium dioctyl sulfosuccinate in propylene glycol as represented in the prior art, was measured against mixtures of sodium dioctyl sulfosuccinate admixed with ethylene oxide adducts of TMDD. These surfactants were present at levels of 0.28%, 0.4% and 0.8% concentration. Two methods were used to evaluate surface tension, those being equilibrium and dynamic. The formulation and results are provided in Table 4.

**TABLE 4**

| Equilibrium and Dynamic surface tension for various formulations in water at 0.28%, 0.4% and 0.80% concentration of total surfactant actives in water. | | | | | | |
|---|---|---|---|---|---|---|
| Formulations | Equilibrium surface tension dynes/cm low bubble rate | | | Dynamic Surface Tension dynes/cm high bubble rate | | |
| | 0.28% | 0.40% | 0.80% | 0.28% | 0.40% | 0.80% |
| Commercial DOSS- 85% in propylene glycol | 29.1 | 27.3 | 26.1 | 30.5 | 28.6 | 27.3 |
| DOSS (65 g)/S420 (35 g) | 27.4 | 26.4 | 25.3 | 28.2 | 27.0 | 25.9 |
| DOSS (65 g)/S440 (35 g) | 28.6 | 27.4 | 25.4 | 29.6 | 28.2 | 26.3 |
| Surfynol 420* | 32 | | | | | |
| Surfynol 440* | 31 | | | | | |
| Surfynol 420 and 440 surfactants are not soluble in DOSS at levels greater than 0.1%. | | | | | | |

In preparing surface active formulations, it was noted that the DOSS/S420 mixtures readily dissolved while the commercial DOSS in propylene glycol gelled on addition to the water containing system. From the above Table 4, surface tension reduction of the surfactant compositions was evaluated and compared to DOSS. Surprisingly, the compositions containing the ethylene oxide adduct of TMDD gave significantly lower surface tensions than DOSS which permits enhanced wetting of substrates by surface active formulations. The results with respect to the use of Surfynol 420 and 440 surfactants show that by themselves they do not improve surface tension vis-a-vis their admixture with DOSS.

### EXAMPLE 4

### Wetting Agent Systems Using Non-Acetylenic Nonionic Surfactant

The procedure of Example 1 was repeated except that two nonionic surfactants were compared to an ethoxylated acetylenic alcohol. The formulations and physical properties are set forth in Tables 5 and 6.

**TABLE 5**

| Ingredients | DOSS (PASTE) AND PLURONIC BLEND | | | | | |
|---|---|---|---|---|---|---|
| | I | II | III | IV | V | VI |
| DOSS (Paste) | 65 | 58.25 | 65 | 54.2 | 65 | 54.2 |
| Surfynol 420 | 35 | 31.75 | | -- | -- | -- |
| Pluronic L62* | -- | -- | 35 | 29.1 | -- | -- |
| Pluronic L64* | -- | -- | -- | -- | 35 | 29.1 |
| Water | -- | 10 | -- | 16.7 | -- | -- |
| % Active | 90 | 80 | 90 | 75 | 90 | 75 |
| Appearance | Clear | Clear | Hazy | Hazy | Hazy | Hazy |
| Viscosity, 30 RPM | 2150 | 256 | 3000 | 359 | 2320 | 380 |
| Surface Tension, DYNES/CM (0.4% Active) Equilibrium | -- | 25.2 | -- | 29.5 | -- | 29.8 |
| Dynamic | -- | 25.9 | -- | 30.9 | -- | 30.7 |

| | | | | | | |
|---|---|---|---|---|---|---|
| * Pluronic L62 is a trademark of BASF Corp. for block copolymers of propylene and ethylene oxide having an HLB of from 1 to 7. | | | | | | |
| ** Pluronic L64 is a trademark of BASF Corp. for block copolymers of propylene and ethylene oxide having an HLB of from 12 to 18. | | | | | | |

**TABLE 6**

| INGREDIENTS | DOSS/PLURONIC BLENDS | | | |
|---|---|---|---|---|
| | I | II | III | IV |
| DOSS (paste) | 40 | 60 | 40 | 60 |
| Pluronic L62 | 40 | 20 | -- | -- |
| Pluronic L64 | -- | -- | 40 | 20 |
| water | 20 | 20 | 20 | 20 |
| % active | 74 | 71 | 74 | 71 |
| appearance | clear | clear | clear | clear |
| viscosity | 349 | 546 | 381 | 658 |
| surface tension, dynes/cm (0.4% Active) equilibrium | -- | 34.1 | -- | 34.1 |
| Dynamic | -- | 34.8 | -- | 34.9 |

Tables 4 and 5 show that the two nonionic surfactants, Pluronic L62 and Pluronic L64, do not enhance surface activity since the surface tension values are higher than DOSS alone. When higher levels of water were added as shown in Table 5, surface tension increased. However, the solution cleared as noted in Table 4.

### EXAMPLE 5

### Pressure Sensitive Adhesive Formulation

Aqueous pressure sensitive adhesive systems based on a vinyl-acrylic polymer system were prepared utilizing a commercial DOSS wetting agent in propylene glycol (80%) as a formulation and utilizing formulations based on a mixture of DOSS paste (85%) and Surfynol 420 surfactant in a 58.25/31.75 weight ratio and a mixture of DOSS paste (85%) and Surfynol 440 surfactant in a 58.25/31.75 weight ratio. The formulations were 80% active and contained 10% water by weight. The level of addition of the DOSS containing wetting agent formulations was 1% by weight. The formulation and results are provided in Table 7.

**TABLE 7**

| Equilibrium and Dynamic surface tension pressure sensitive adhesive formulations at 1% by weight | | |
|---|---|---|
| Formulations | Equilibrium surface tension dynes/cm | Dynamic Surface Tension dynes/cm |
| Commercial DOSS- 80% in propylene glycol | 32.4 | 37.7 |
| DOSS/S420 | 31.2 | 34.4 |
| DOSS/440 | 30.5 | 34.0 |

The results in Table 7 show that the ethoxylated acetylenic alcohols in combination with DOSS result in a formulation having reduced surface tension leading to better wetting of the substrate. This leads to better peel strengths and better adhesion properties.

## Claims

1. A water soluble surfactant composition comprising:
A. a sulfur containing wetting agent represented by the formulas: 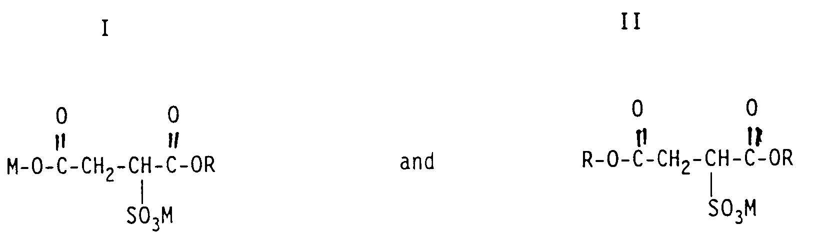 wherein: M represents an alkali metal, an alkaline earth metal and an ammonium group; and an ammonium group and R is alkyl having from 1-20 carbon atoms; and,
B. an alkoxylated acetylenic alcohol represented by the formulas: 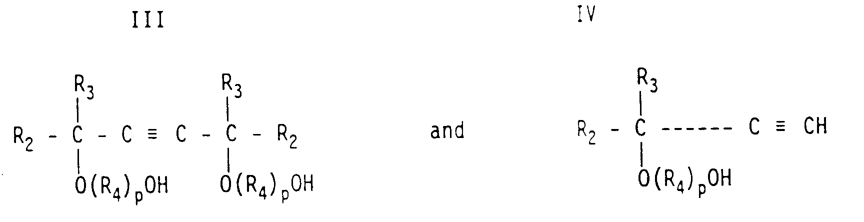 wherein: R₂ and R₃ are lower alkyl having from 1-4 carbon atoms, R₄ is C₂₋₄ alkylene oxide and p is from 0.25 to 15.

2. The water soluble surfactant composition of Claim 1 wherein from the surfactant composition comprises from 20 to 85% by weight of sulfur containing wetting agent and 15 to 80% by weight of alkoxylated acetylenic alcohol and the alkoxylated acetylenic alcohol is represented by formula III.

3. The water soluble surfactant composition of Claim 2 wherein the R group in said sulfur containing wetting agent has from 8 to 12 carbon atoms.

4. The water soluble surfactant composition of Claim 3 wherein M is sodium.

5. The water soluble surfactant composition of Claim 3 wherein the sulfosuccinate is represented by formula II and is a sodium dialkyl sulfosuccinate.

6. The water soluble surfactant composition of Claim 4 wherein the sodium dialkyl sulfosuccinate is sodium dioctyl sulfosuccinate.

7. The water soluble surfactant composition of Claim 6 wherein the alkoxylated acetylenic alcohol is an ethylene oxide adduct of an acetylenic alcohol.

8. The water soluble surfactant composition of Claim 6 wherein the alkoxylated acetylenic alcohol is ethylene oxide adduct of 2,4,7,9-tetramethyl-5-decyne-4,7-diol having from 1-10 moles ethylene oxide per mole of decyne diol.

9. The water soluble surfactant composition of Claim 6 wherein R₂ is methyl and p is from 0.5 to 5.

10. The water soluble surfactant composition of Claim 9 wherein R₃ is methyl and p is 0.5 to 5.

11. The water soluble surfactant composition of Claim 6 wherein p is from 1 to 10.

12. The water soluble surfactant composition of Claim 6 wherein R₂ is methyl, R₃ is methyl, R₄ is ethylene oxide, the sum of p is from 3 to 10 and the level of sodium dioctyl sulfosuccinate is from 50% to 70% by weight and the level of ethoxylated acetylenic alcohol is from 30 to 50% by weight.

## Patentansprüche

1. Wasserlösliche oberflächenaktive Zusammensetzung, welche umfaßt:
A. ein schwefelhaltiges Netzmittel, dargestellt durch die Formeln: 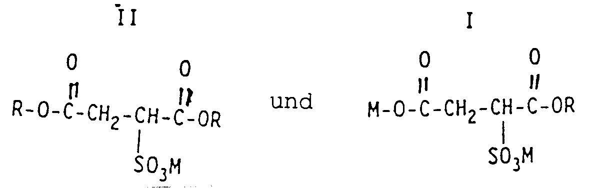 worin: M ein Alkalimetall, ein Erdalkalimetall und eine Ammoniumgruppe darstellt; und eine Ammoniumgruppe und R ein Alkyl mit 1 bis 20 Kohlenstoffatomen ist;
B. einen alkoxylierten acetylenischen Alkohol, dargestellt durch die Formeln: 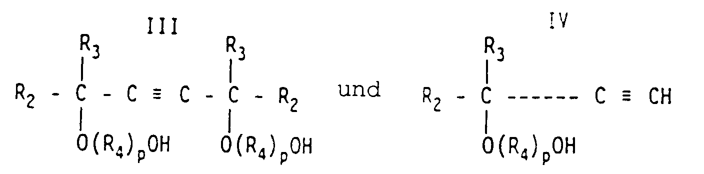 worin: R₂ und R₃ ein niederes Alkyl mit 1 - 4 Kohlenstoffatomen sind, R₄ ein C₂₋₄-Alkylenoxid ist und p 0,25 bis 15 beträgt.

2. Wasserlösliche oberflächenaktive Zusammensetzung nach Anspruch 1, worin die oberflächenaktive Zusammensetzung 20 bis 85 Gew.-% an schwefelhaltigem Netzmittel und 15 bis 80 Gew.-% an alkoxyliertem acetylenischen Alkohol umfaßt und der alkoxylierte acetylenische Alkohol durch Formel III dargestellt wird.

3. Wasserlösliche oberflächenaktive Zusammensetzung nach Anspruch 2, worin die R-Gruppe in dem schwefelhaltigen Netzmittel 8 bis 12 Kohlenstoffatome hat.

4. Wasserlösliche oberflächenaktive Zusammensetzung nach Anspruch 3, worin M Natrium ist.

5. Wasserlösliche oberflächenaktive Zusammensetzung nach Anspruch 3, worin das Sulfosuccinat durch Formel II dargestellt wird und ein Natriumdialkylsulfosuccinat ist.

6. Wasserlösliche oberflächenaktive Zusammensetzung nach Anspruch 4, worin das Natriumdialkylsulfosuccinat Natriumdioctylsulfosuccinat ist.

7. Wasserlösliche oberflächenaktive Zusammensetzung nach Anspruch 6, worin der alkoxylierte acetylenische Alkohol ein Ethylenoxid-Addukt eines acetylenischen Alkohols ist.

8. Wasserlösliche oberflächenaktive Zusammensetzung nach Anspruch 6, worin der alkoxylierte acetylenische Alkohol ein Ethylenoxid-Addukt von 2,4,7,9-Tetramethyl-5-decin-4,7-diol mit 1 - 10 Molen Ethylenoxid pro Mol Decindiol ist.

9. Wasserlösliche oberflächenaktive Zusammensetzung nach Anspruch 6, worin R₂ Methyl ist und p 0,5 bis 5 beträgt.

10. Wasserlösliche oberflächenaktive Zusammensetzung nach Anspruch 9, worin R₃ Methyl ist und p 0,5 bis 5 beträgt.

11. Wasserlösliche oberflächenaktive Zusammensetzung nach Anspruch 6, worin p 1 bis 10 beträgt.

12. Wasserlösliche oberflächenaktive Zusammensetzung nach Anspruch 6, worin R₂ Methyl ist, R₃ Methyl ist, R₄ Ethylenoxid ist, die Summe p 3 bis 10 ist und der Gehalt an Natriumdioctylsulfosuccinat 50 bis 70 Gew.-% beträgt und der Gehalt an ethoxyliertem acetylenischen Alkohol 30 bis 50 Gew.-% beträgt.

## Revendications

1. Composition tensioactive hydrosoluble comprenant :
A. un agent mouillant contenant du soufre représenté par les formules : 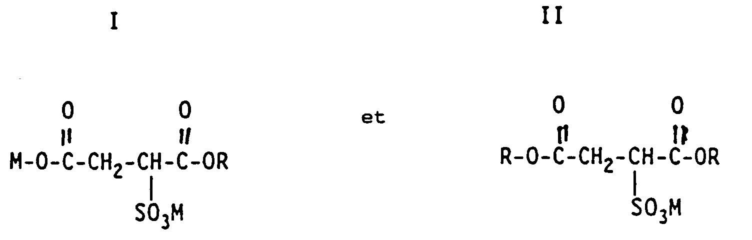 dans lesquelles : M représente un métal alcalin, un métal alcalino-terreux et un groupe ammonium ; et R est un alkyle ayant 1 à 20 atomes de carbone ;
B. un alcool acétylénique alcoxylé représenté par les formules : 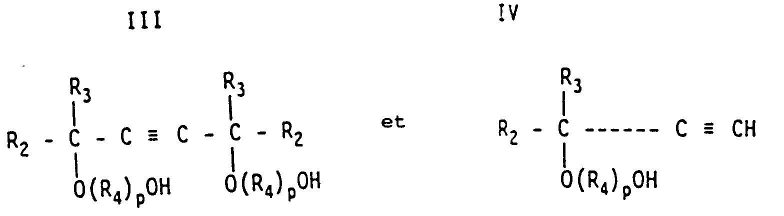 dans lequelles : R₂ et R₃ sont un alkyle inférieur ayant 1 à 4 atomes de carbone, R₄ est un oxyde d'alkylène en C₂₋₄ et p a une valeur de 0,25 à 15.

2. Composition tensioactive hydrosoluble de la revendication 1, où la composition tensioactive comprend 20 à 85 % en poids d'agent mouillant contenant du soufre et 15 à 80 % en poids d'alcool acétylénique alcoxylé et l'alcool acétylénique alcoxylé est représenté par la formule III.

3. Composition tensioactive hydrosoluble de la revendication 2, où le groupe R dans ledit agent mouillant contenant du soufre a 8 à 12 atomes de carbone.

4. Composition tensioactive hydrosoluble de la revendication 3, où M est le sodium.

5. Composition tensioactive hydrosoluble de la revendication 3, où le sulfosuccinate est représenté par la formule II et est un dialkylsulfosuccinate de sodium.

6. Composition tensioactive hydrosoluble de la revendication 4, où ledit alkylsulfosuccinate de sodium est le dioctylsulfosuccinate de sodium.

7. Composition tensioactive hydrosoluble de la revendication 6, où l'alcool acétylénique alcoxylé est un composé d'addition d'oxyde d'éthylène d'un alcool acétylénique.

8. Composition tensioactive hydrosoluble de la revendication 6, où l'alcool acétylénique alcoxylé est un composé d'addition de l'oxyde d'éthylène du 2,4,7,9-tétraméthyl-5-décyne-4,7-diol ayant 1 à 10 moles d'oxyde d'éthylène par mole de décynediol.

9. Composition tensioactive hydrosoluble de la revendication 6, où R₂ est un méthyle et p a une valeur de 0,5 à 5.

10. Composition tensioactive hydrosoluble de la revendication 9, où R₃ est un méthyle et p a une valeur de 0,5 à 5.

11. Composition tensioactive hydrosoluble de la revendication 6, où p a une valeur de 1 à 10.

12. Composition tensioactive hydrosoluble de la revendication 6, où R₂ est un méthyle, R₃ est un méthyle, R₄ est l'oxyde d'éthylène, la somme de p est de 3 à 10 et la teneur du dioctylsulfosuccinate de sodium est de 50 % à 70 % en poids, et la teneur de l'alcool acétylénique éthoxylé est de 30 à 50 % en poids.
